# DEMANDE DE BREVET EUROPEEN

(11) **EP 0 629 024 A1**
(43) Date de publication de la demande: **14.12.1994**
(21) Numéro de dépôt: 94401256.6
(22) Date de dépôt: 07.06.1994
(51) Int. Cl.: H01R 13/639

(54) **Dispositif de verrouillage et de déverrouillage de deux connecteurs complémentaires**

(30) Priorité: 10.06.1993 FR 9307008
(71) Demandeur: FRAMATOME CONNECTORS INTERNATIONAL, 92400 Courbevoie, Paris (FR)
(72) Inventeur: Bonnetier, Marie-Noelle, F-92220 Bagneux (FR); Le Bris, Henri, F-92160 Antony (FR)
(74) Mandataire: Keib, Gérard

(57) **Abrégé**

L'invention concerne un dispositif de verrouillage et de déverrouillage de deux connecteurs complémentaires, comportant :
- un élément d'actionnement (9) déplaçable dans une direction longitudinale d'insertion et de séparation des deux connecteurs entre une première position de verrouillage des deux connecteurs complémentaires (1, 2) et une deuxième position de déverrouillage,
- au moins un levier de renvoi (6) disposé dans un plan perpendiculaire à la direction longitudinale et dont une première extrémité (31) est commandée à partir de l'élément d'actionnement (9) pour déplacer le levier (6) entre une position de verrouillage dans laquelle une deuxième extrémité (34) du levier (6) permet un verrouillage de l'ensemble de connexion et une position de déverrouillage.

## Description

La présente invention a pour objet un dispositif de verrouillage et de déverrouillage de deux connecteurs complémentaires, en particulier une fiche et une embase.

En général, les ensembles de connexion de type connu permettant un verrouillage et un déverrouillage imposent aux deux connecteurs complémentaires des efforts supérieurs à la simple force d'insertion du contact.

Le problème posé par l'invention est l'obtention d'un ensemble de connexion dans lequel les fonctions de verrouillage et de déverrouillage sont obtenues sans effort autre que les forces d'insertion (ou de séparation) des contacts.

Dans ce but, le dispositif de verrouillage et de déverrouillage de deux connecteurs complémentaires est caractérisé selon l'invention en ce qu'ils comportent :
- un élément d'actionnement déplaçable dans une direction longitudinale d'insertion et de séparation des deux connecteurs complémentaires de l'élément de connexion entre une première position correspondant à un verrouillage des deux connecteurs complémentaires et une deuxième position correspondant à leur déverrouillage,
- au moins un levier de renvoi disposé dans un plan perpendiculaire à la direction longitudinale et dont une première extrémité est commandée à partir de l'élément d'actionnement pour déplacer le levier entre une position de verrouillage dans laquelle une deuxième extrémité du levier permet un verrouillage de l'ensemble de connexion et une position de déverrouillage dans laquelle la deuxième extrémité du levier permet un déverrouillage de l'ensemble de connexion.

Le dispositif de verrouillage et de déverrouillage tel que mentionné ci-dessus présente en particulier l'avantage, grâce à la coopération de l'élément d'actionnement déplaçable en direction longitudinale et du levier de renvoi, de n'augmenter que peu l'encombrement de l'ensemble de connexion.

Ce dispositif peut en outre permettre un verrouillage et un déverrouillage automatiques par la mise en oeuvre d'un actuateur notamment électromagnétique piloté par une électronique de commande.

Dans des applications à un ensemble de connexion de sécurité pour borne de charge de véhicule électrique à contact de type douille-broche, l'élément d'actionnement électro-magnétique est susceptible d'autoriser le déverrouillage des deux connecteurs à la suite d'une détection de la fin de la charge de l'accumulateur du véhicule.

Le dispositif peut comporter au moins un poussoir déplaçable dans une direction latérale et intercalé entre l'élément d'actionnement et la première extrémité du levier.

Selon un mode de réalisation préféré, le poussoir présente un corps de poussoir et une tête de poussoir couplée au corps de poussoir de manière à permettre d'écarter ledit levier vers sa position de déverrouillage lorsqu'une force d'intensité supérieure à une valeur donnée est exercée qui tend à séparer les deux connecteurs complémentaires, le poussoir pouvant en particulier comporter à cet effet un dispositif de rappel élastique dont le tarage détermine ladite valeur donnée.

Le dispositif selon l'invention peut également comporter un élément de verrouillage déplaçable latéralement et intercalé entre la deuxième extrémité du levier et une gorge de verrouillage d'un desdits connecteurs complémentaires. L'élément de verrouillage peut être en particulier un levier de verrouillage mobile en rotation, et dont l'axe longitudinal peut être parallèle à ladite direction longitudinale.

Le dispositif peut comporter un détecteur de présence d'une fiche.

Les moyens de verrouillage et de déverrouillage peuvent être portés par une embase constituant un des connecteurs complémentaires. Le dispositif peut alors comporter un dispositif de détection de présence d'une fiche qui constitue l'autre connecteur complémentaire, et/ou un dispositif de détection de fin de verrouillage.

D'autres caractéristiques et avantages de l'invention apparaîtront mieux à la lecture de la description qui suivre, en liaison avec les dessins qui représentent :
- la figure 1, une vue en coupe partielle selon C-C d'une embase selon l'invention,
- les figures 2a et 2b, des coupes partielles selon D-D d'un dispositif selon l'invention, respectivement en position déverrouillée et en position verrouillée,
- les figures 3a et 3b, respectivement une vue suivant G de la fiche seule et suivant F de l'embase seule selon une réalisation préférée de l'invention,
- les figures 4a et 4b, des coupes partielles suivant respectivement A-A et B-B d'un ensemble de connexion selon l'invention.

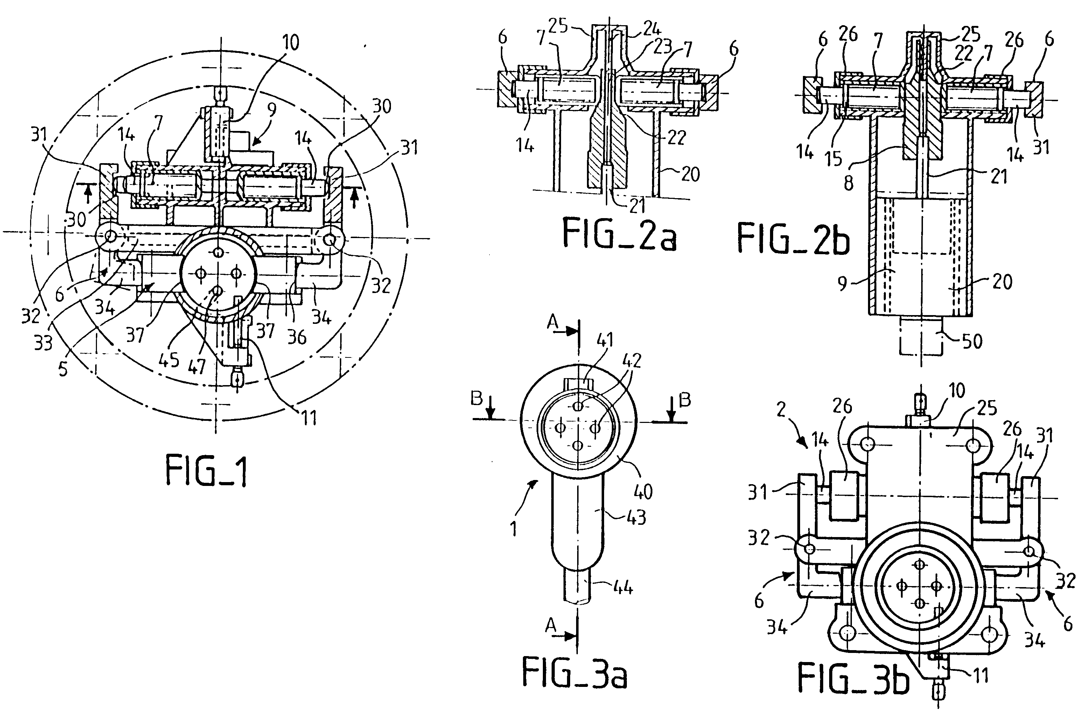

En se reportant plus particulièrement aux figures 1, 2a et 2b, le dispositif de verrouillage et de déverrouillage comporte un élément d'actionnement 9 du type électro-magnétique piloté par une électronique de commande 50 sous l'action d'un microrupteur 11 de détection de présence d'une fiche 1. L'élément d'actionnement 9 présente un doigt de prolongement 21 qui commande le déplacement d'un axe 8 présentant une rampe conique 22 et dont la partie avant 23 est guidée par une aiguille 24 solidaire d'un boîtier de guidage 25. La rampe conique 22 agit sur des poussoirs 7 présentant des têtes de poussoir 14. L'effort communiqué par l'élément d'actionnement 9 est transmis, entre les corps de poussoir 7 et les têtes de poussoir 14, par l'intermédiaire de ressorts tarés 15. Le mouvement des éléments d'actionnement 9 est sensiblement parallèle à la direction d'encliquetage d'une fiche 1 sur l'embase 2, et les poussoirs 7 se déplacent dans une direction sensiblement perpendiculaire de manière à renvoyer le mouvement latéralement. La tête de poussoir 14 actionne des leviers 6 dont l'axe principal, en position de verrouillage sensiblement vertical (selon la convention de représentation adoptée sur la figure 1).

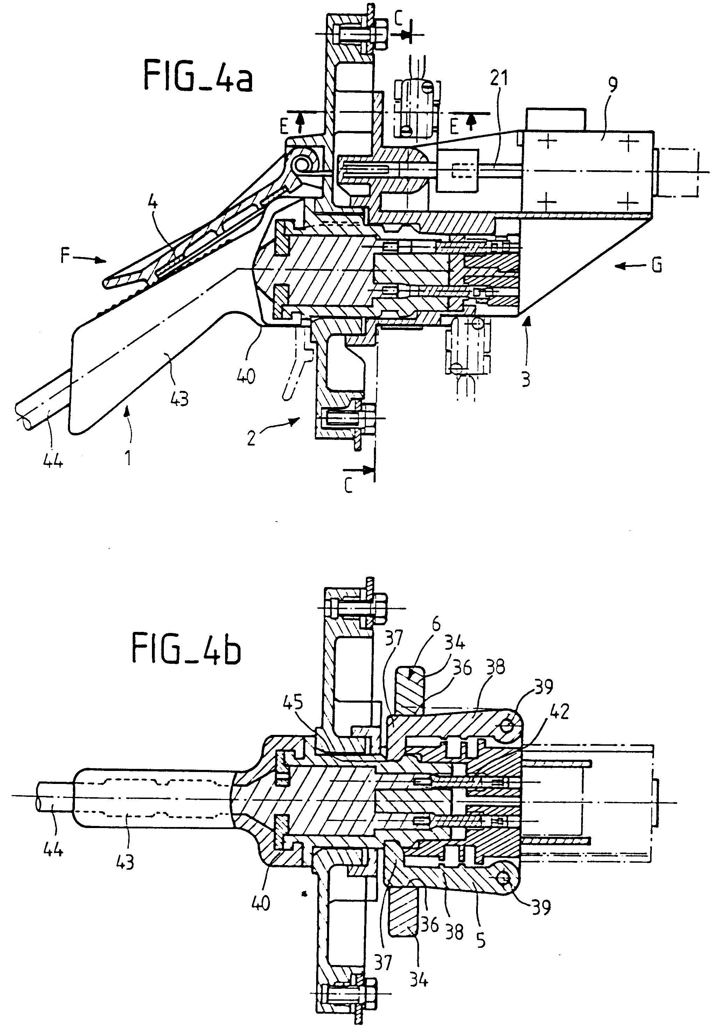

Ces leviers 6 sont mobiles en rotation autour d'un axe 32 qui présente une partie d'extrémité 31 comportant un logement 30 coopérant avec les têtes de poussoir 14, et l'autre extrémité d'actionnement 34 dont l'extrémité 36 (mieux vue à la figure 4b) actionne des mâchoires 5 constituées par des leviers dont l'axe principal est, en position de verrouillage, sensiblement parallèle à la direction d'insertion de la fiche 1 et de l'embase 2. Ces leviers 5 sont mobiles autour d'un axe vertical 39 (selon la même convention de représentation) de manière à s'écarter et à se rapprocher, par leur extrémité 37, d'un profil de verrouillage de la fiche 1 qui est constitué par une gorge annulaire 45.

Lors de sa connexion à l'embase 2, la fiche 1 est, après relèvement du capot de protection 4, introduite dans l'embase 2 jusqu'à venir en butée. Lors de cette opération, les seuls efforts sont les efforts d'insertion des contacts respectifs mâle 42 de la fiche 1 et femelle 47 de l'embase 2. En fin de course, le microrupteur 11 détecte la présence de la fiche 1 et actionne le circuit électronique 50 qui commande le déplacement de l'élément d'actionnement 9 entre la position déverrouillée représentée à la figure 2a et la position verrouillée représentée à la figure 2b. Plus particulièrement, dans la configuration de la figure 2a, les poussoirs 7 sont en position rétractée en butée sur l'extrémité étroite 23 située dans le prolongement de la rampe conique 22, et par conséquent l'extrémité 34 du levier 6 en position écartée permet aux mâchoires 5 de dégager le profil de verrouillage constitué par la gorge annulaire 45 de la fiche 1. Par contre, dans la position de verrouillage, le poussoir 7, progressivement écarté par l'action de la rampe conique 22 déplace les leviers 6 de sorte que ceux-ci maintiennent en position les mâchoires 5 dans la gorge annulaire 45 de la fiche 1, verrouillant ainsi celle-ci.

La présence de la tête du poussoir couplée au corps de poussoir 7 par l'intermédiaire de ressorts tarés 15 permet, en cas de traction sur la fiche 1 supérieure à une force donnée, par exemple quelques dizaines de Newton, que les mâchoires 5 repoussent les leviers 6 qui appuient sur les têtes de poussoirs 14 en comprimant les ressorts 15 jusqu'à permettre le déverrouillage de la fiche 1. Cette variante permet un déverrouillage de sécurité évitant la détérioration de l'ensemble de connexion.

Le dispositif de verrouillage et de déverrouillage tel que décrit ci-dessus présente l'avantage que le parallélisme entre la direction d'insertion des contacts et l'élément d'actionnement 9 et du renvoi par leviers 6, 5, de n'augmenter que faiblement l'encombrement, en particulier latéral, du connecteur. L'élément d'actionnement 9 est logé au-dessus des contacts 47 alors que les renvois par levier 6, 5 permettent d'éviter un encombrement latéral trop important en dépit du fait que les actions de verrouillage et de déverrouillage s'effectuent précisément par des mouvements latéraux. En outre, la disposition des mâchoires 5 également dans une direction parallèle à l'axe d'insertion et de déverrouillage de la fiche 1 de l'embase 2 permet que, lors d'un effort de traction exercé sur la fiche, les seules contraintes répercutées sur le dispositif de verrouillage soient des contraintes de traction par les mâchoires 5.

On remarquera également (figure 1) le profil arrondi 37 coopérant avec les rainures de verrouillage 45, et permettant aux leviers 5 d'exercer leur fonction de mâchoire sur une surface importante.

Un microrupteur 10 permettant une détection de fin de verrouillage peut également être mise en oeuvre.

## Revendications

1. Dispositif de verrouillage et de déverrouillage de deux connecteurs complémentaires, caractérisé en ce qu'il comporte :
- un élément d'actionnement (9) déplaçable dans une direction longitudinale d'insertion et de séparation des deux connecteurs complémentaires entre une première position correspondant à un verrouillage des deux connecteurs complémentaires (1, 2) et une deuxième position correspondant à leur déverrouillage,
- au moins un levier de renvoi (6) disposé dans un plan perpendiculaire à la direction longitudinale et dont une première extrémité (31) est commandée à partir de l'élément d'actionnement (9) pour déplacer le levier (6) entre une position de verrouillage dans laquelle une deuxième extrémité (34) du levier (6) permet un verrouillage de l'ensemble de connexion et une position de déverrouillage dans laquelle la deuxième extrémité (34) du levier permet un déverrouillage de l'ensemble de connexion.

2. Dispositif selon la revendication 1, caractérisé en ce que l'élément d'actionnement comporte un dispositif électronique de commande (50) et un actuateur commandé par ledit dispositif électronique (50).

3. Dispositif selon une des revendications 1 ou 2, caractérisé en ce qu'il comporte au moins un poussoir (7) déplaçable dans une direction latérale et intercalé entre l'élément d'actionnement (9) et la première extrémité (31) du levier (6).

4. Dispositif selon une des revendications 1 à 3, caractérisé en ce que le poussoir présente un corps de poussoir (7) et une tête de poussoir (14) couplée au corps de poussoir (7) de manière à permettre d'écarter ledit levier (6) vers sa position de déverrouillage lorsqu'une force d'intensité supérieure à une valeur donnée est exercée qui tend à séparer les deux connecteurs complémentaires (1, 2).

5. Dispositif selon la revendication 4 caractérisé en ce que la tête de poussoir (14) comporte un dispositif de rappel élastique (15) dont le tarage détermine ladite valeur donnée.

6. Dispositif selon une des revendications précédentes, caractérisé en ce qu'il comporte un élément de verrouillage (5) déplaçable latéralement et intercalé entre la deuxième extrémité (34) du levier (6) et une gorge de verrouillage (45) d'un desdits connecteurs complémentaires (1, 2).

7. Dispositif selon la revendication 6, caractérisé en ce que l'élément de verrouillage est un levier de verrouillage (5) mobile en rotation.

8. Dispositif selon une des revendications 6 ou 7, caractérisé en ce que l'axe longitudinal du levier de verrouillage (5) est parallèle à ladite direction longitudinale.

9. Dispositif selon une des revendications précédentes, caractérisé en ce qu'il comporte un dispositif de détection (26) de présence d'une fiche (1).

10. Dispositif selon une des revendications précédentes, caractérisé en ce que les moyens de verrouillage et de déverrouillage sont portés par une embase (2) constituant un des connecteurs complémentaires.

11. Dispositif selon la revendication 10, caractérisé en ce qu'il comporte un dispositif de détection de présence d'une fiche (11), ladite fiche constituant l'autre connecteur complémentaire, et/ou un dispositif de détection de fin de verrouillage (11).
